# EUROPEAN PATENT SPECIFICATION

(11) **EP 1 166 147 B1**
(45) Date of publication and mention of the grant of the patent: **08.04.2009**
(21) Application number: 00937010.7
(22) Date of filing: 30.05.2000
(51) Int. Cl.: G01S 5/14, G01C 21/16

(54) **NAVIGATION APPARATUS AND METHOD**
VERFAHREN UND VORRICHTUNG ZUR NAVIGATION
APPAREIL ET PROCEDE DE NAVIGATION

(30) Priority: 28.05.1999 GB 9912407
(43) Date of publication of application: 02.01.2002
(73) Proprietor: Fisher-Tortolano Systems Limited, Bridge of Allan Stirling FK9 4DQ (GB)
(72) Inventor: SPRACKLEN, Tim Univ. of Aberdeen Engineering Dept., Aberdeen AB24 3UE (GB)
(74) Representative: Allan, James Stewart
(86) International application number: PCT/GB2000/001966
(87) International publication number: WO 2000/073815

(56) References cited:
- EP-A- 0 763 712
- EP-A- 0 848 231
- WO-A-97/22010
- US-A- 5 654 890
- KERR T H: "Critique of some neural network architectures and claims for control and estimation" IEEE TRANSACTIONS ON AEROSPACE AND ELECTRONIC SYSTEMS, APRIL 1998, IEEE, USA, vol. 34, no. 2, pages 406-419, XP002147551 ISSN: 0018-9251
- GRIFFITHS B ET AL: "ACCURACY PROJECTIONS FOR PENANT (PERFORMANCE ENHANCED NAVIGATION USING NEURAL NETWORK TECHNOLOGY)" PROCEEDINGS OF THE NATIONAL AEROSPACE AND ELECTRONICS CONFERENCE. (NAECON),US,NEW YORK, IEEE, vol. -, 24 May 1993 (1993-05-24), pages 873-879, XP000419497

## Description

The present invention relates to a method of providing navigation information, and more particularly, but not exclusively, relates to a method for a wide range of applications such as vehicles, such as motor cars, motor bikes, boats, ships, vans, lorries, trains, aircraft, hovercraft, balloons, gliders and the like, or any application which requires a navigational reference platform, as well as other applications such as drilling boreholes in the ground for purposes such as the exploration of hydrocarbons and other applications where knowledge of the navigation of a person or object is required, such as munitions, ordinance, missiles, rocketry and any other military or civilian application, as well as subsea and underwater vehicles, humans under ground, animals such as wildlife tagging etc.

The majority of commercial aircraft utilise an Inertial Navigation System (INS) to permit the pilot to navigate the aircraft entirely independently of any external reference signals such as the Global Positioning System (GPS) operated by the United States Department Of Defence (USDOD) or the many different aviation navigation beacons that are available. INS was originally developed for intercontinental ballistic missiles and comprises a series of two or three orthogonally mounted gyroscopes and three accelerometers to measure minute changes in the vehicle's acceleration; in other words, the gyroscopes and accelerometers measure very small angular rotations and g-forces. By mathematically or electronically integrating these g-forces, the INS is able to determine positional changes in the vehicles position, and given a known starting location, the INS the current position can be determined.

However, the mathematical process of integration of the vehicle acceleration unavoidably involves small errors due to the mechanical tolerances involved in the gyroscopes and accelerometers. These small errors, when integrated and multiplied by time to compute the positional variations of the vehicle, cause a long term "drift" in the calculated position of the INS. An aircraft, using a commercial INS unit, crossing the Atlantic from Heathrow airport can be 3km away from its true position when it finally reaches the East coast of the USA.

Furthermore, commercial aviation INS cost upwards of US$ 100,000 and are therefore aimed at professional, safety critical applications. Such a system is shown in European Patent No 848231 which discloses a plurality of inertial navigation sensors provided in an array, one array being provided for each of the X, Y and Z directions and each array having a non-linear output coupled to a separate artificial neural network.

Satellite navigation systems, such as the US Navstar GPS, the Russian GLObal Navigation System (GLONASS) and the European Geostationary Navigation Overlay Service (EGNOS) are also well known. The GPS in particular has already revolutionised the ground transportation sector, and GPS can commonly be found on-board cars, trucks, boats and small aircraft and are widely used by recreational sailors, climbers and hikers. Key factors of the success of GPS are the low-cost and miniaturisation of the GPS receivers. However, because of their poor short-term navigation performance and the requirement to always have a number of the Navstar satellites in sight, navigation applications based on GPS receivers are in fact limited. Furthermore, GPS suffers from the well known "Urban Canyon" effect which results from the screening of the GPS antenna by the buildings in a typical urban city centre. In fact, the GPS signal level is very low, and almost any obstruction such as a tree branch will attenuate the signal sufficiently to prevent reception of the signal from the satellite by the GPS receiver. Furthermore, the USDOD has prevously applied Selective Availability (SA) to the GPS signal, where SA is a deliberate degradation intended to deny access to the full GPS accuracy to non-US approved personnel. SA imposes a 100m 95% Circle Error Probability (CEP), which means that 95% of the reported positions from a GPS receiver should be within 100m of the true location. This does not take into account signal degradation due to propagation or geometrical precision dilution effects.

INS provides accurate information on position, speed and attitude, at a relatively high rate, but is only generally effective over short periods due to the accumulation of the INS sensor errors. A GPS receiver with a single antenna can provide position and speed, but if there are only three satellites in the line of sight of the antenna then the GPS generally cannot provide attitude although it can do so if there are four satellites in the line of sight of the antenna. The GPS provides this data at a relatively low rate, but with excellent long term position accuracies.

It is therefore desirable, for applications where it is possible to use GPS, to integrate the output of the INS and GPS to combine the advantages of both systems whilst avoiding many of the disadvantages of each system in isolation. A conventional way of doing this, particularly for military applications is to use a Kalman Filter which takes two independent measurements of the same quantity, where each of the two measurements has its own independent error sources, and integrates them together to provide an improved estimate of the quantity with an associated error less than or equal to either of the original errors. A detailed understanding of the mathematics behind Kalman Filters reveals that the two criteria that are important for the operation of a Kalman Filter are the independence of the error sources and the linearity of the sensors. Therefore, if the error sources are not independent, or the sensors are non-linear, then the estimate will be worse than either of the original estimates, not better. Conventional INS devices are linear and are thus suitable for use with a Kalman Filter.

According to the present invention, there is provided a method of providing navigation information, as set out in claim 1.

Typically, a portion or all of the processing may be conducted in a simulated manner. Alternatively, the processing may be conducted by a processor mounted on the apparatus.

A GPS (or similar satellite system) may also be provided where data output from the GPS is provided to the processor.

Preferably, the navigation apparatus is provided within a housing which may be mounted on an object, person, animal, tool, vehicle, or any item for which knowledge of its navigation is desired.

Preferably, the inertial navigation sensors comprise a silicon etching formed in silicon wafer.

The advantage of using such a solid state accelerometer is that it is relatively inexpensive.

The artificial neural network may optionally be in the form of a Kohonen Feature map.

Typically, the patterns used to train the artificial neural network represent pattern that will be observed in the real data used during the "execution" phase of operation. Preferably, many training cycles are conducted during the training phase.

The artificial neural network is trained in an unsupervised manner. Data representing the known location is input to the artificial neural network during the labelling phase of the unsupervised training.

Typically, the inertial navigation sensor is moved between many known locations of a track, such as a track arranged within a laboratory, where the spacial location of many points on the track have been previously and accurately surveyed.

Embodiments of the present invention will now be described, with reference to the accompanying drawings, in which:-
Fig. 1 is a block diagram of a navigation system in accordance with the present invention; and
Fig. 2 is a schematic representation of a portion of a Neural Network for illustrative purposes.

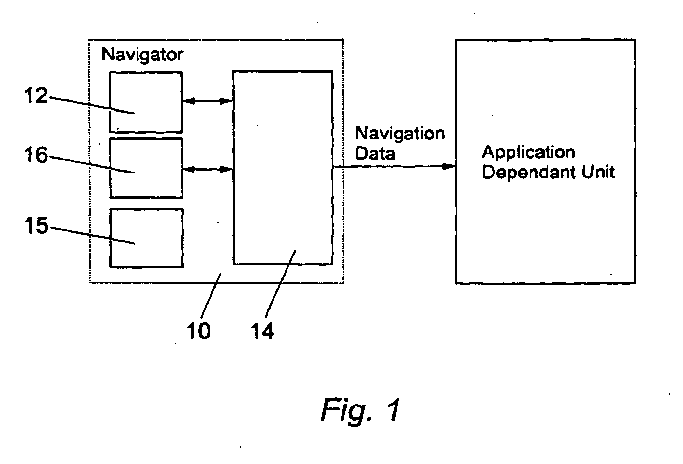

Fig. 1 shows a schematic block diagram of the main components of a navigation system 10 in accordance with the present invention. The navigation system optionally comprises a commercially available GPS or DGPS receiver 12, where data output of this optional GPS/DGPS receiver 12 is connected by any suitable means such as electrical wiring to a processing module 14. An electrical power supply 15, which may be any suitable power supply, is also provided.

An INS 16 is also provided, and has its data output connected by any suitable means to the processing module 14. The INS 16 preferably comprises three orthogonally arranged miniature solid-state accelerometers, examples of which are manufactured by ANALOGUE DEVICES, in that the three accelerometers are mounted perpendicularly to one another. Additionally, the INS 16 comprises two orthogonally mounted gyroscopes which can be used to measure the rotation of the INS.

The solid state accelerometer 16 comprises a sub-miniature silicon "beam" etched into the silicon wafer. The beam deflects or bends under the applied g-forces experienced by the INS 16, and the deflection of the beam can be measured by a number of methods electronically.

The advantage of using such a solid state accelerometer is that it is relatively inexpensive. Hitherto, such solid state accelerometers have only been known for use in the anti-shake "Steady Shot" mechanisms utilised in consumer handheld camcorders, and such solid state accelerometers are extensively non-linear in that there is not a linear relationship between the acceleration and the output voltage. In other words, if the acceleration is doubled, the output voltage does not double, but rather varies in a complex manner with acceleration. Furthermore, such solid state accelerometers suffer from a pronounced resonant frequency as a result of the dimensions of the silicon beam employed in the accelerometer, which produces a marked non-linearity in the sensitivity of the device under vibrational conditions. As a result, such solid state accelerometers have hitherto been considered to be entirely unsuitable for use within an INS environment.

The processing module 14 comprises a non-linear processor, which is in essence a pattern classifier, in the form of an Artificial Neural Network (ANN). .

The ANN comprises a networked array of neurons, and in its hardware implementation, the number of neurons is only limited by the number that can be provided on a silicon chip. At present, it is proposed to use a silicon chip with 256 neurons thereon, but this figure will increase substantially over time as the technology improves.

The ANN effectively has two phases of operation, these being "training" and "execution" and which will be detailed subsequently. The ANN requires to be trained on example data, and this will also be detailed subsequently.

The ANN 14 is a probabilistic device with each neuron in the network being initialised with a series of random "weights", where the weights determine the relationship between the different inputs fed to a neuron. As a result, the convergence on the patterns in the input data is purely one of statistical chance. For example, with a particular distribution of initial weights, on one occasion the ANN 14 may converge on a particular pattern in the input data set, and on another occasion with a different weight distribution, this pattern may be missed.

The patterns used to train the ANN 14 should be typical of the patterns that will be observed in the real data used during the "execution" phase of operation. It should be noted that the quality or relevance of the training data will have a major impact on the capability of the ANN 14 during execution. If the ANN 14 has not been trained on data containing examples of patterns that are of interest, then it will be unable to identify such patterns in the execution phase. Additionally, like biological neural systems, the ANN 14 must be shown many examples of the training data, and it may be necessary to have a training run containing hundreds of thousands of cycles.

Initially, the ANN 14 requires to be trained on example data, and there are typically two different methods of training the ANN 14, supervised and unsupervised, the latter being used in the current invention.

With regard to supervised training, the input data are fed from the GPS/DGPS 12 (if present) and/or the INS 16 into the ANN 14, while the known location of the navigation system 10 (which is known from previously conducting an accurate survey of the location) is also fed to the ANN 14. The ANN 14 then attempts, by use of a Backpropagation algorithm as described by J.J. Hopfield, "Neural networks and physical systems with emergent collective computational abilities" in the Proceedings of the National Academy of Sciences 79:2554-2558, 1982, to adjust its internal weights so as to best represent the input data. The navigational system 10 may be moved through a number of known locations and hence the ANN 14 will be receiving data from the GPS/DGPS 12 (if present) and/or the INS 16, each of which represent an independent estimate of the position of the system 10. However, it should be borne in mind that each of the two data sets contain errors, in that the data are "noisy". At each training step, the actual location is fed to the ANN 14 and the ANN 14 attempts to adjust its internal weights so that its output is close to the actual location value.

After sufficient training of the ANN 14 has occurred, in that the ANN 14 understands the relationship between the GPS/DGPS (if present) and/or INS data, the training phase is concluded and the execution phase is commenced.

The execution phase consists of moving the navigation system 10 to an unknown location and the ANN 14, since it understands the relationship between the GPS/DGPS 12 (if present) and/or the INS 16, will provide an output that represents the corrected position of the navigational system 10. It should be noted that this positional estimate will be subject to error in the same way as before.

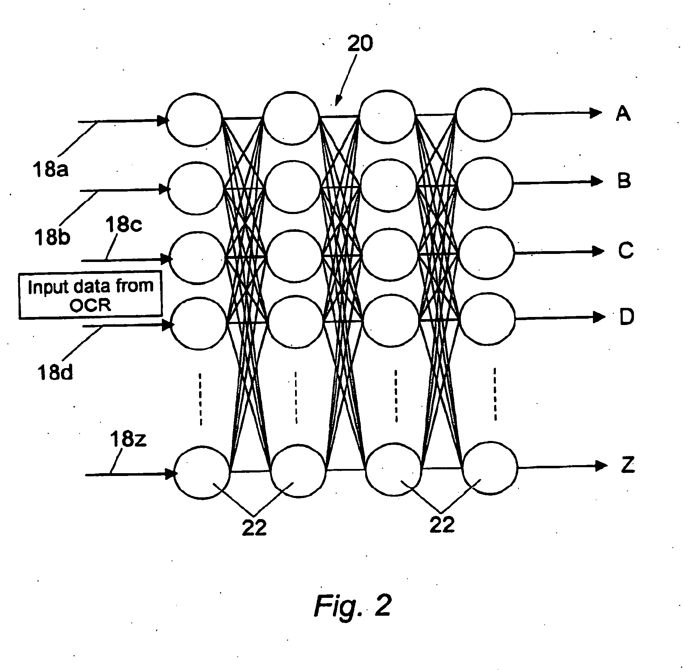

In order to clarify the nature of the supervised method of training, an example is now given of a training exercise for another application, specifically Optical Character Recognition (OCR). In this OCR applications, data are provided by either a digital camera, or a scanner positioned over the character to be recognised. Fig. 2 shows a typical arrangement for an ANN 20 used in an OCR application, where the data provided by the camera or scanner are input into the ANN 20 at locations 18a to 18z. The data input will usually be in the form of pixel data from the camera. The ANN 20 has a number of outputs A to Z, each representing a letter from the alphabet. The ANN 20 further comprises an array of neurons 22 which are networked. In general, the desired result in this OCR application is that when the camera/scanner views the letter A, the A output of the ANN 20 should be activated whilst the other B to Z outputs are not active. The ANN 20 is "trained" by inputting the pixel data for the letter A into the inputs 18a to 18z. The weights in the neurons 22 are initially random, with the result that the outputs A to Z indicate a random pattern. The desired output of A is now shown to the ANN 20, and by using its training algorithm, such as the Backpropagation algorithm as described in the aforementioned J.J. Hopfield publication, the ANN 20 tries to adjust its weights so as to make the A output a 1 (that is, active) and the B to Z outputs a 0 (that is, inactive). The training is continued by showing the ANN 20 thousands of examples of the letter A as well as the letters B to Z. For each time that the ANN 20 is input with data relating to a letter, the ANN is shown what the correct result should be. As training is progressed, the ANN should start to converge on the correct result, and hence no longer outputs a random result, such as when the ANN is shown the letter A, the A output is close to a 1 whilst the B to Z outputs are close to 0. The more training that is given to the ANN 20, then the accuracy of the ANN 20 will increase, until the accuracy is acceptable, at which stage, the training phase can be stopped, and the execution phase can be commenced.

In the execution phase, the ANN 20 is now shown an unknown letter (i.e. form a text that is to be the subject of the OCR) by having the pixel data fed into the inputs 18a to 18z. The correct output should be close to a 1 whilst the other outputs should all be close to a zero.

With regard to the unsupervised training method, which is being used in the current invention, this requires the ANN 14 to be in the specialised form of the SOM. This unsupervised training method does not require training data to be used, but rather the SOM attempts to form internal classifications of significant clusters of data observed in the input data. The SOM 14 is trained by moving the navigational system 10 through a wide variety of unknown positions, without showing the SOM 14 at each location what the correct value is for the location. The SOM 14 then classifies the relationships between the input data in a suitable manner, such as described in Tuero Kohonen "Analysis of a Simple Self-Organising Process" Biological Cybernetics 44(2):135-140, 1982 publication.

Once sufficient training cycles have been completed, the SOM 14 is then subjected to a "labelling" phase, which consists of moving the SOM 14 through a number of known test locations which have been previously accurately surveyed. This knowledge of the spacial location of the test locations is used to label the activated SOM 14 neurons in an appropriate manner, such as described in Tuero Kohonen "Self-Organising Maps" Springer Series in Information Sciences, 1995. After this labelling phase has been concluded, the weights of the neurons in the SOM 14 are "frozen", and the SOM 14 can enter the execution phase.

Use of the navigation system 10 is now permitted, since the GPS/DGPS 12 (if present) and/or the INS 16 provide data to the SOM 14 which has been trained to recognise the relationship between the SA GPS/DGPS 12 (if present) and the non-linear and resonant INS 16. Hence, the SOM 14 output provides an improved estimate of the position of the navigational system 10 since the SA error experienced by the GPS 12 is entirely independent of the non-linearity and resonance experienced by the INS 16.

In order to clarify the nature of the unsupervised method of training, an example is now given of a training exercise for another application, specifically facial recognition. An SOM used in that application may be shown thousands of faces without telling the SOM which face belongs to which person. The SOM will hopefully classify faces from the same person into the same category, and those of different people into respective different categories. After this training phase has been concluded, the labelling phase is commenced in which the SOM is shown individual examples (only one is required) of each of the faces. Then observation is done for the clusters of neurons in the SOM which are activated or excited by that face, and those clusters of activated neurons are labelled to represent the name of the person whose face is being used.

It should be noted that there is a great advantage in using the unsupervised method of training for the ANN/SOM 14, in that the initial training phase can be conducted in a simulation environment by computer, which enables extensive training of the SOM to be undertaken with minimal inconvenience. The simulation environment contains a mathematical model of the INS 14 and the GPS 12 (if present), where the mathematical model is created using the manufacturer's specifications. The simulated navigational system 10 is taken over a varied and extensive training track within the simulation environment. During this training the outputs of the GPS 12 and INS 16 are computed and fed into the program which is simulating the SOM 14. A suitable program for simulating the SOM 14 is MATLAB (RTM) which is offered by THE MATH WORKS, INC. Hence, the simulated SOM 14 "learns" about the relationship between the INS 16 and the GPS 12, including the effects of INS drift and GPS SA. Typically, thousands of training cycles will be required in the simulation.

The simulation models are, however, inevitably somewhat limited in accuracy. For this reason, a physical navigation system 10 is created, and the physical SOM 14 is initialised using the data from the simulation; that is the simulated SOM 14 neuron weights. These simulated data provides a good starting point, since the INS 16 and GPS 12 models are reasonably accurate. Hence, the final training required to optimise the SOM weight vectors is much reduced. The final training of the SOM 14 is concluded in the same manner as detailed above.

Once the SOM 14 of the test rig has been fully trained, the SOM 14 weight vectors can be transferred to production units manufactured by mass production techniques. These production units do not require significant additional training since the weights from the SOM 14 of the test rig represent the relationship between the GPS 12 and INS 16 modules.

In practice, there may be some variation between production solid-state sensors due to the natural manufacturing tolerances. Post-production training can be conducted in a similar manner to the test rig training if required.

Tests have been conducted that reveal that given a known starting point (to take out the effects of GPS SA), the navigational system 10 experiences a 30cm/hour short term drift. Long term drift is limited by the basic GPS accuracy of 1-3 metres. Therefore, during "urban canyons", the INS provides good short term accuracy of 30cm/hour. Over longer term use, there should be a maximum drift of 3 metres assuming that the GPS 12 is present. Furthermore, the SA is removed because of its semi-periodic nature, with the INS 16 providing the short term navigational reference.

It should be noted that the GPS 12 could be omitted from the navigation system 10, and the navigation system 10 could be used for applications where there is no line of sight to a GPS Navstar satellite, such as included in a downhole string which is inserted into a borehole in the earth such as an oil or gas well, since the INS 16 will provide at least a reasonable short term accuracy.

Furthermore, it is envisaged at present that the ANN/SOM 14 will be implemented in a hardware unit. However, it is also foreseen that a software implementation of the ANN/SOM 14 could be achieved, where the software program is run on Digital Signal Processing (DSP) chips as these become more powerful in order to allow a real time software implementation.

Modifications and improvements can be incorporated without departing from the scope of the invention. For instance, the navigation system 10 could be incorporated into a vehicle (not shown) to permit an operator of the vehicle to monitor the speed of the vehicle, thus gaining independence from the conventional vehicle electronics which currently monitor the speed.

## Claims

1. A method of providing navigation information, the method comprising:-
providing three orthogonally arranged solid state inertial navigation accelerometers sensors (16), each having a non-linear data output, such that a solid state inertial navigation accelerometer sensor (16) is provided for each of the x, y and z axes;
providing two orthogonally mounted gyroscopes each providing rotational measurements in their data output;
and an artificial neural network (14) in the form of a Self-Organising Map (SOM) (14);
**characterised by** the three accelerometer sensor data outputs and the data outputs of the two gyroscopes are all coupled to an input of the SOM processor (14);
wherein the SOM (14) is trained in an unsupervised manner comprising two separate training phases;
a first training phase which comprises moving the three inertial navigation sensors (16) and the two gyroscopes between a number of unknown locations without showing the SOM (14) at each unknown location what the correct value is for the unknown location and wherein the SOM (14) then classifies the relationships between the data input by the three inertial navigation sensors (16) and the two gyroscopes; and
a second training phase wherein data representing the known location is input to the SOM (14) during a labelling phase which consists of moving the three inertial navigation sensors (16) and the two gyroscopes through a number of known test locations which have been previously accurately surveyed and labelling the activated SOM (14) neurons using the known location data;
and processing all of the non-linear real data provided by the three accelerometer data outputs together with the data outputs of the two gyroscopes with the SOM processor (14) such that the SOM processor (14) processes all the data for the x, y and z axes during the execution phase of operation.

2. A method according to claim 1, further comprising providing a GPS/DGPS receiver (12) outputting GPS/DGPS data, wherein the GPS/DGPS (12) data output is coupled to an input of the SOM (14).

3. A method according to any preceding claim, wherein a portion or all of the processing is conducted In a simulated manner.

4. A method according to any preceding claim, wherein the navigation apparatus (10) is provided within a housing which is mounted on an object, person, animal, tool, vehicle, or any item for which knowledge of its navigation is desired.

5. A method according to any preceding claim, wherein the solid-state sensors (16) are accelerometers (16) and comprise a silicon etching formed in silicon wafer.

6. A method according to any preceding claim, wherein the SOM (14) is in the form of a Kohonen Feature map.

7. A method according to any preceding claim, wherein patterns used to train the artificial neural network (14) represent patterns that will be observed in the real data used during the "execution" phase of operation.

8. A method according to any preceding claim, wherein many training cycles are conducted during the training phase.

9. A method according to any preceding claim, wherein the three inertial navigation sensors (16) and the two gyroscopes are moved between many known locations of a track during the second training phase.

10. A method according to any preceding claim, wherein the SOM (14) is implemented in a hardware unit.

11. A method according to any of claims 1 to 9, wherein the SOM (14) is implemented in a software program run on digital signal processing chips.

## Patentansprüche

1. Ein Verfahren zum Bereitstellen von Navigationsinformationen, wobei das Verfahren Folgendes beinhaltet:
Bereitstellen von drei orthogonal angeordneten Halbleiter-Trägheitsnavigations-Beschleunigungsmessersensoren (16), von denen jeder eine nicht lineare Datenausgabe aufweist, so dass für jede der x-, y- und z-Achsen ein Halbleiter-Trägheitsnavigations-Beschleunigungsmessersensor (16) bereitgestellt ist;
Bereitstellen von zwei orthogonal montierten Gyroskopen, die in ihrer Datenausgabe jeweils Drehungsmessungen bereitstellen;
und ein künstliches neuronales Netz (14) in der Form einer selbstorganisierenden Karte (SOM) (14);
**dadurch gekennzeichnet, dass** die Datenausgaben der drei Beschleunigungsmessersensoren und die Datenausgaben der zwei Gyroskope alle an einen Eingang des SOM-Prozessors (14) gekoppelt sind;
wobei die SOM (14) auf eine unüberwachte Art und Weise angelernt wird, die zwei separate Anlernphasen beinhaltet:
eine erste Anlernphase, die das Bewegen der drei Trägheitsnavigationssensoren (16) und der zwei Gyroskope zwischen einer Anzahl unbekannter Orte beinhaltet, ohne dass der SOM (14) an jedem unbekannten Ort gezeigt wird, was der richtige Wert für den unbekannten Ort ist, und wobei die SOM (14) dann die Beziehungen zwischen dem Dateneingang von den drei Trägheitsnavigationssensoren (16) und den zwei Gyroskopen klassifiziert; und
eine zweite Anlernphase, bei der während einer Markierungsphase, die aus dem Bewegen der drei Trägheitsnavigationssensoren (16) und der zwei Gyroskope durch eine Anzahl bekannter Testorte, die zuvor akkurat vermessen wurden, und dem Markieren der aktivierten Neuronen der SOM (14) unter Verwendung der bekannten Ortsdaten besteht, den bekannten Ort repräsentierende Daten in die SOM (14) eingegeben werden;
und Verarbeiten aller nicht linearen Realdaten, die von den Datenausgaben der drei Beschleunigungsmesser bereitgestellt werden, zusammen mit den Datenausgaben der zwei Gyroskope mit dem SOM-Prozessor (14), so dass der SOM-Prozessor (14) während der Ausführungsphase des Betriebs alle Daten für die x-, y- und z-Achsen verarbeitet.

2. Verfahren gemäß Anspruch 1, das ferner das Bereitstellen eines GPS/DGPS-Empfängers (12), der GPS/DGPS-Daten ausgibt, beinhaltet, wobei die Datenausgabe des GPS/DGPS (12) an einen Eingang der SOM (14) gekoppelt ist.

3. Verfahren gemäß einem der vorhergehenden Ansprüche, wobei ein Teil der Verarbeitung oder die ganze Verarbeitung auf eine simulierte Art und Weise durchgeführt wird.

4. Verfahren gemäß einem der vorhergehenden Ansprüche, wobei das Navigationsgerät (10) mit einem Gehäuse versehen ist, das auf einem Objekt, einer Person, einem Tier, einem Werkzeug, einem Fahrzeug oder jeder beliebigen anderen Einheit, für die eine Kenntnis ihrer Navigation erwünscht ist, montiert ist.

5. Verfahren gemäß einem der vorhergehenden Ansprüche, wobei die Halbleitersensoren (16) Beschleunigungsmesser (16) sind und eine in einer Siliciumscheibe gebildete Siliciumätzung beinhalten.

6. Verfahren gemäß einem der vorhergehenden Ansprüche, wobei die SOM (14) in der Form einer Kohonen-Merkmalskarte vorliegt.

7. Verfahren gemäß einem der vorhergehenden Ansprüche, wobei Muster, die verwendet werden, um das künstliche neuronale Netz (14) anzulernen, Muster darstellen, die in den Realdaten, die während der "Ausführungs"-Phase des Betriebs verwendet werden, beobachtet werden.

8. Verfahren gemäß einem der vorhergehenden Ansprüche, wobei während der Anlernphase viele Anlernzyklen durchgeführt werden.

9. Verfahren gemäß einem der vorhergehenden Ansprüche, wobei die drei Trägheitsnavigationssensoren (16) und die zwei Gyroskope während der zweiten Anlernphase zwischen vielen bekannten Orten eines Kurses bewegt werden.

10. Verfahren gemäß einem der vorhergehenden Ansprüche, wobei die SOM (14) in einer Hardwarebaueinheit implementiert wird.

11. Verfahren gemäß einem der Ansprüche 1 bis 9, wobei die SOM (14) in einem Softwareprogramm implementiert wird, das auf Chips zur digitalen Signalverarbeitung ablaufen gelassen wird.

## Revendications

1. Une méthode pour fournir des informations de navigation, la méthode comprenant :
fournir trois capteurs accéléromètres de navigation inertielle à semi-conducteurs arrangés de façon orthogonale (16), chacun ayant une sortie de données non linéaires, de sorte qu'un capteur accéléromètre de navigation inertielle à semi-conducteurs (16) est fourni pour chacun des axes x, y et z ;
fournir deux gyroscopes montés de façon orthogonale, chacun fournissant des mesures de rotation dans leur sortie de données ;
et un réseau de neurones artificiels (14) sous la forme d'une carte auto-organisatrice (SOM) (14) ;
**caractérisée en ce que** les sorties de données des trois capteurs accéléromètres et les sorties de données des deux gyroscopes sont toutes couplées à une entrée du processeur de la SOM (14) ;
dans laquelle la SOM (14) est entraînée d'une manière non supervisée comprenant deux phases d'entraînement distinctes :
une première phase d'entraînement qui comprend déplacer les trois capteurs de navigation inertielle (16) et les deux gyroscopes entre un certain nombre d'emplacements inconnus sans montrer à la SOM (14) à chaque emplacement inconnu quelle est la valeur correcte pour l'emplacement inconnu en question et dans laquelle la SOM (14) classifie alors les relations entre les données entrées par les trois capteurs de navigation inertielle (16) et les deux gyroscopes ; et
une deuxième phase d'entraînement dans laquelle des données représentant l'emplacement connu sont entrées dans la SOM (14) durant une phase d'étiquetage qui consiste à déplacer les trois capteurs de navigation inertielle (16) et les deux gyroscopes d'un emplacement à l'autre parmi un certain nombre d'emplacements tests connus qui ont précédemment été levés de façon précise et à étiqueter les neurones activés de la SOM (14) en utilisant les données de l'emplacement connu ;
et traiter toutes les données réelles non linéaires fournies par les sorties de données des trois accéléromètres conjointement avec les sorties de données des deux gyroscopes à l'aide du processeur de la SOM (14) de sorte que le processeur de la SOM (14) traite toutes les données pour les axes x, y et z durant la phase opérationnelle d'exécution.

2. Une méthode selon la revendication 1, comprenant en outre fournir un récepteur GPS/DGPS (12) sortant des données GPS/DGPS, dans laquelle la sortie de données du GPS/DGPS (12) est couplée à une entrée de la SOM (14).

3. Une méthode selon n'importe quelle revendication précédente, dans laquelle une partie ou l'intégralité du traitement est effectuée d'une manière simulée.

4. Une méthode selon n'importe quelle revendication précédente, dans laquelle l'appareil de navigation (10) est fourni à l'intérieur d'un boîtier qui est monté sur un objet, une personne, un animal, un outil, un véhicule, ou toute chose dont il est souhaité connaître la progression navigationnelle.

5. Une méthode selon n'importe quelle revendication précédente, dans laquelle les capteurs à semi-conducteurs (16) sont des accéléromètres (16) et comprennent une gravure de silicium formée dans une plaquette de silicium.

6. Une méthode selon n'importe quelle revendication précédente dans laquelle la SOM (14) se présente sous la forme d'une carte de prototypes de Kohonen.

7. Une méthode selon n'importe quelle revendication précédente, dans laquelle des modèles utilisés pour entraîner le réseau neuronal artificiel (14) représentent des modèles qui seront observés dans les données réelles utilisées durant la phase opérationnelle « d'exécution ».

8. Une méthode selon n'importe quelle revendication précédente, dans laquelle de nombreux cycles d'entraînement sont effectués durant la phase d'entraînement.

9. Une méthode selon n'importe quelle revendication précédente, dans laquelle les trois capteurs de navigation inertielle (16) et les deux gyroscopes sont déplacés entre de nombreux emplacements connus d'une piste durant la deuxième phase d'entraînement.

10. Une méthode selon n'importe quelle revendication précédente dans laquelle la SOM (14) est implémentée dans une unité-matériel.

11. Une méthode selon n'importe lesquelles des revendications 1 à 9, dans laquelle la SOM (14) est implémentée dans un programme logiciel exécuté sur des puces de traitement numérique des signaux.
